# EUROPEAN PATENT SPECIFICATION

(11) **EP 2 031 854 B1**
(45) Date of publication and mention of the grant of the patent: **01.02.2012**
(21) Application number: 08162992.5
(22) Date of filing: 26.08.2008
(51) Int. Cl.: H04N 1/00

(54) **Method and apparatus for displaying images**
Verfahren und Vorrichtung zur Anzeige von Bildern
Procédé et appareil pour afficher des images

(30) Priority: 27.08.2007 KR 20070086091
(43) Date of publication of application: 04.03.2009
(73) Proprietor: Samsung Electronics Co., Ltd., Suwon-si, Gyeonggi-do (KR)
(72) Inventor: Kim, Suk-Soon, Samsung Electronics Co., Ltd, Gyeonggi-do (KR); Lim, Bum-Taek, Samsung Electronics Co., Ltd., Gyeonggi-do (KR); Han, Young-Seop, Samsung Electronics Co., Ltd., Gyeonggi-do (KR)
(74) Representative: Harrison Goddard Foote

(56) References cited:
- US-A1- 2004 261 103
- US-A1- 2007 182 999
- US-B1- 6 700 625

## Description

### BACKGROUND OF THE INVENTION

### 1. Field of the Invention

The present invention relates generally to a method and apparatus for displaying images in an image-processing device, and in particular, to a method and apparatus for displaying a plurality of images on one frame.

### 2. Description of the Related Art

Generally, in providing a user with a list of multiple images stored in a memory, an image-processing device provides a text-type list indicating identification information for each image with a text, or an image-type list indicating the identification information with an image such as thumbnail. The image-type list, compared with the text-type list, has a fewer number of list items, i.e., image identification information that can be displayed on one frame, but can intuitively effectively provide the actual information on an image corresponding to each item. Generally, thumbnails are used for the images constituting list items of the image-type list. Thumbnails are for displaying the original large images in small images, thereby allowing the user to easily and quickly see and/or manage a greater number of images. Thumbnails are one-to-one mapped to their original images, exist as image data independent of the original image data, and have smaller capacities than the original image data. Therefore, in the processing process of providing the image-type list, the use of thumbnails is more efficient and faster than use of the original images.

The image-processing device, even when the image-processing device does not provide the image-type list, can display multiple images on one frame on the screen of the image-processing device. For example, the multi-image displaying can include an image preview.

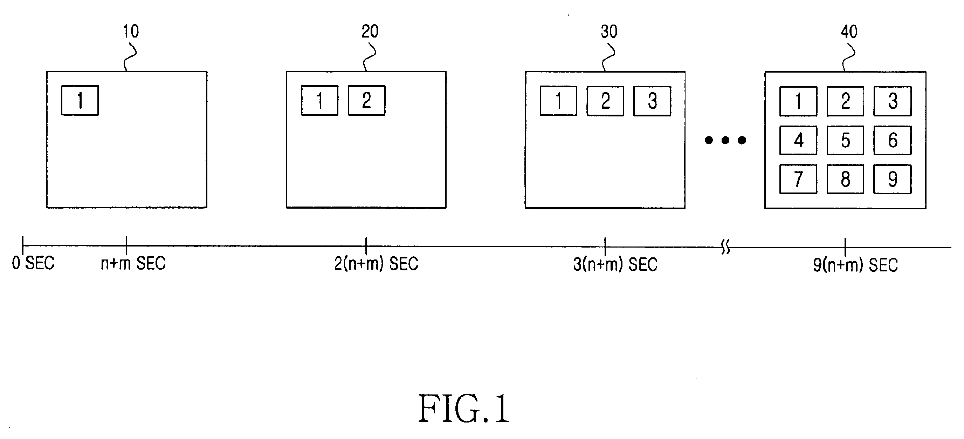

A process in which the image-processing device displays multiple images like the image-type list is as follows. First, the image-processing device decodes any one of multiple image data stored in memory of the image-processing device, and adjusts a size of the decoded image according to the currently-set multiple image arrangement patterns. In this case, the decoded image data can be either the original image data or the thumbnail data. The 'image arrangement pattern' refers to information on an arrangement rule for multiple images displayed on one frame, and the image arrangement pattern includes the entire arrangement form, the number of images included in one frame, arrangement order of images, image size, etc. When the size adjustment for the decoded image is completed, the image-processing device displays the decoded image on the screen according to the image arrangement pattern. Thereafter, the image-processing device decodes the next image, adjusts the size of the decoded image, and then displays the size-adjusted image. Assuming that the time required for decoding one image and adjusting the size of the decoded image is m seconds, the time required for displaying the decoding-completed image is n seconds, and the image processing device displays 9 pictures, the time required for displaying all of the 9 pictures is 9(m+n) seconds. This process is shown in FIG. 1.

With reference to FIG. 1, one image is displayed on the frame at (n+m) second (See 10), and two images are displayed on the frame at 2(n+m) second (See 20). Thereafter, three images are displayed at 3(n+m) second (See 30), and nine images are displayed at 9(n+m) second (See 40).

However, when multiple images are displayed through this process, a next image is displayed after the display of a previous image is completed, so the display process may appear slow to a user. Therefore, there is a need for a new method capable of reducing the processing time for displaying the multiple images.

Patent application US 2004/0261103 discloses a method and apparatus for displaying multiple images wherein each of said images is decoded and displayed sequentially one by one according to a predetermined image arrangement pattern.

### SUMMARY OF THE INVENTION

An aspect of the present invention is to address at least the problems and/or disadvantages and to provide at least the advantages described below. Accordingly, an aspect of the present invention is to provide a method and apparatus capable of displaying multiple images on one frame faster in an image-processing device.

According to one aspect of the present invention, there is provided a method for displaying images in an image-processing device. The image display method includes (a) if there is a multi-image display request for previously stored multiple images, determining a preset number of simultaneously-displayed images; (b) decoding each of simultaneously-displayed images among the multiple images, and adjusting a size of the decoded images according to a predetermined display image size; (c) simultaneously displaying the decoded images on one frame according to an image arrangement pattern which is previously set as information indicating an arrangement rule for multiple images displayed on one frame; and (d) repeatedly performing steps (b) and (c) on non-displayed images among the multiple images until all of the multiple images are displayed.

Preferably, the number of simultaneously-displayed images is set to a number greater than one, and is set less than or equal to the total number of images displayable on one frame.

Preferably, the frame is a region where images are displayed, wherein the image arrangement pattern is information on an arrangement rule for multiple images displayed on one frame, and includes as set values the total number of images, indicating the number of images displayable on one frame, an arrangement form indicating the entire form in which the images are arranged, an arrangement order indicating an order in which the images are displayed on the frame, an arrangement position indicating positions where the images are displayed on the frame, and sizes of the images displayed on the frame.

Preferably, the set values included in the image arrangement pattern are set according to user's selection.

Preferably, the image arrangement pattern includes the set values, which are independently set for multiple frames.

### BRIEF DESCRIPTION OF THE DRAWINGS

The above and other aspects, features and advantages of the present invention will become more apparent from the following detailed description when taken in conjunction with the accompanying drawings in which:
FIG. 1 is a diagram illustrating a conventional image display process;
FIG. 2 is a diagram illustrating a structure of an image-processing device to which the present invention is applied;
FIG. 3 is a diagram illustrating an operation of an image-processing device according to an embodiment of the present invention;
FIG. 4 is a diagram illustrating an image display process according to an embodiment of the present invention; and
FIGs. 5A to 5D are diagrams illustrating an image display process based on various image arrangement patterns according to an embodiment of the present invention.

### DETAILED DESCRIPTION OF THE PREFERRED EMBODIMENTS

Preferred embodiments of the present invention will now be described in detail with reference to the annexed drawings. In the following description, a detailed description of known functions and configurations incorporated herein has been omitted for clarity and conciseness.

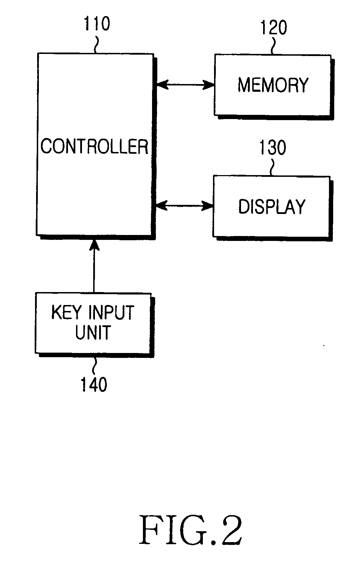

With reference to FIG. 2, a description will now be made of a structure of an image-processing device according to an exemplary embodiment of present invention.

FIG. 2 is a diagram illustrating a structure of an image-processing device to which the present invention is applied. As illustrated in FIG. 2, the image-processing device includes a controller 110, a memory 120, a display 130, and a key input unit 140.

The display 130, under the control of the controller 110, displays various images on a screen of the display 130.

The key input unit 140 includes multiple function keys corresponding to several functions of the image-processing device, and provides the controller 110 with key input data corresponding to keys that the user presses.

The memory 120 stores a processing/control program for the controller 110, and also stores reference data and various storage data. The memory 120 is provided as a working memory of the controller 110. Further, the memory 120 stores multiple images and their associated thumbnails, and also stores multiple image arrangement patterns. The 'image arrangement pattern' refers to information on an arrangement rule for multiple images displayed on one frame, and the image arrangement pattern includes an arrangement form, the total number of images, the number of simultaneously-displayed images, an arrangement order, arrangement positions and image sizes according to the present invention. The frame is a region where images are displayed. The total number of images is the number of images displayable on one frame, and the arrangement form is the entire form in which the images are arranged. The arrangement order is an order in which the images are displayed on the frame, and the arrangement positions are positions where the images are displayed on the frame. The image sizes are sizes of the images displayed on the frame. The number of simultaneously-displayed images is the number of multiple images that should be simultaneously displayed on one frame according to the present invention, and it is set herein to a number between 2 and the total number of images. Although the arrangement form, the total number of images, the number of simultaneously-displayed images, the arrangement order, the arrangement positions and the image size, included in each image arrangement pattern, all have their default values, they are subject to change according to the user's selection. For one image arrangement pattern, multiple frames for each of which the arrangement form, the total number of images, the number of simultaneously-displayed images, the arrangement order, the arrangement positions and the image size are differently set, can be set such that they should be sequentially alternately executed until all images are displayed. The image arrangement pattern can be classified into, for example, a grid pattern, a figure pattern such as circle and tetragon, a character pattern having a character shape, a geometrical pattern such as a spiral, etc. according to its entire arrangement form.

The controller 110 controls the overall operation related to the image processing such as generation, edition, display and deletion of images. According to the present invention, the controller 110, upon detecting a multi-image display request, finds out the number of simultaneously-displayed images, which is set in the currently-set image arrangement pattern. The controller 110 decodes images stored in the memory 120, the number of which is equal to the found number of simultaneously-displayed images, adjusts their size, and then simultaneously displays on one frame as many images as the number of simultaneously-displayed images. Subsequently, the controller 110 decodes as many next images as the number of simultaneously-displayed images among the remaining images, adjusts their size, and output the size-adjusted images to the display 130, thereby simultaneously displaying images on the frame. For example, if there are three simultaneously-displayed images, the controller 110 sequentially decodes three images, adjusts the size of the three decoded images, and then displays the three sequentially-decoded images on one frame. Thereafter, the controller 110 decodes the next three images, adjusts their size, and displays the three images on the same frame at a time. In this case, if thumbnail data is stored in the memory 120, the controller 110 displays the images using the thumbnail data, and if there is no thumbnail data, the controller 110 displays the images using the original image data.

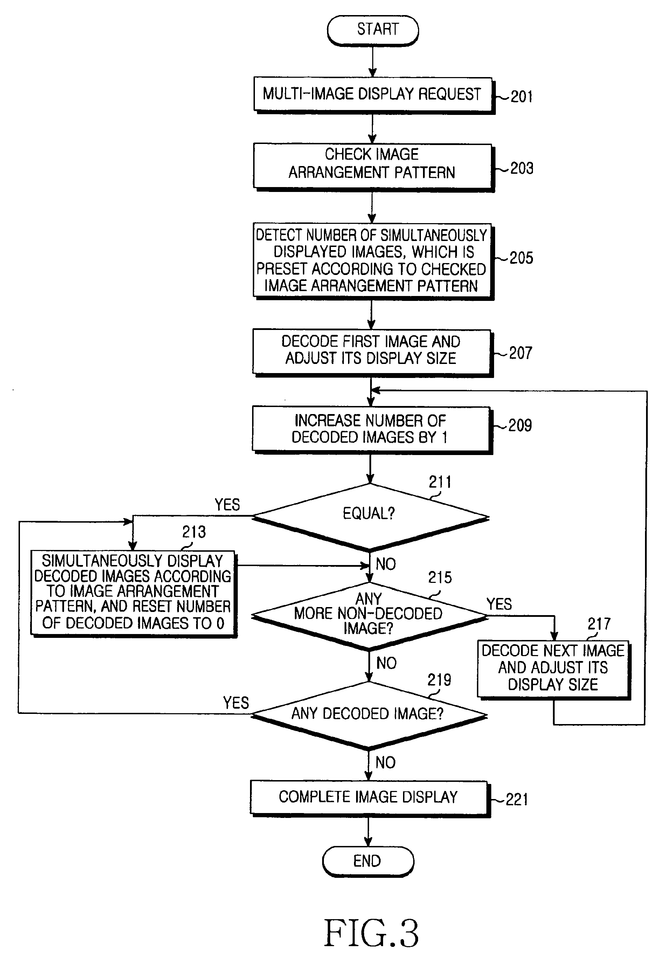

With reference to FIG. 3, a process of displaying multiple images on one frame in the image-processing device according to an embodiment of the present invention will now be described.

FIG. 3 is a diagram illustrating an operation of an image-processing device according to an embodiment of the present invention.

Referring to FIG. 3, if the controller 110 detects a multi-image display request in step 201, the controller 110 proceeds to step 203. The "multi-image display request" refers to a request for displaying multiple images on one frame. For example, the multi-image display request can include a stored-image list request and a stored-image preview request. In step 203, the controller 110 finds out a set image arrangement pattern, and then proceeds to step 205. The image arrangement pattern can be set such that the arrangement pattern is mapped to one of the previously stored multiple image arrangement patterns, selected by the user. In step 205, the controller 110 detects the number of simultaneously-displayed images, which is set according to the found image arrangement pattern, and then proceeds to step 207. According to an embodiment of the present invention, the number of simultaneously-displayed images can be set to the number that the user has selected based on each image arrangement pattern, or can be determined as a fixed number for each image arrangement pattern. According to an alternative embodiment of the present invention, the number of simultaneously-displayed images can be set to a fixed number regardless of the types of the image arrangement patterns, or can be set to a number selected by the user. For example, the number of simultaneously-displayed images corresponding to an image arrangement pattern A can be set to five, and the number of simultaneously-displayed images corresponding to an image arrangement pattern B can be set to four.

In step 207, the controller 110 decodes a first display image among the images stored in the memory 120, and adjusts a size of the decoded image according to the image size included in the found image arrangement pattern. After the image size adjustment is completed, the controller 110 increases the number of decoded images by one in step 209. In step 211, the controller 110 determines whether the number of decoded images is equal to the number of simultaneously-displayed images. If the numbers are equal, the controller 110 proceeds to step 213, and if they are unequal, the controller 110 proceeds to step 215. In step 215, the controller 110 checks if there is any remaining non-decoded image. If there is any remaining non-decoded image, the controller 110 proceeds to step 217 where it decodes the next image among the images stored in the memory 120, and adjusts its size. Thereafter, in step 209, the controller 110 increases the number of decoded images by one. The controller 110 repeatedly performs this process until the number of decoded images becomes equal to the number of simultaneously-displayed images, i.e., the controller 110 decodes as many images as the number of simultaneously-displayed images.

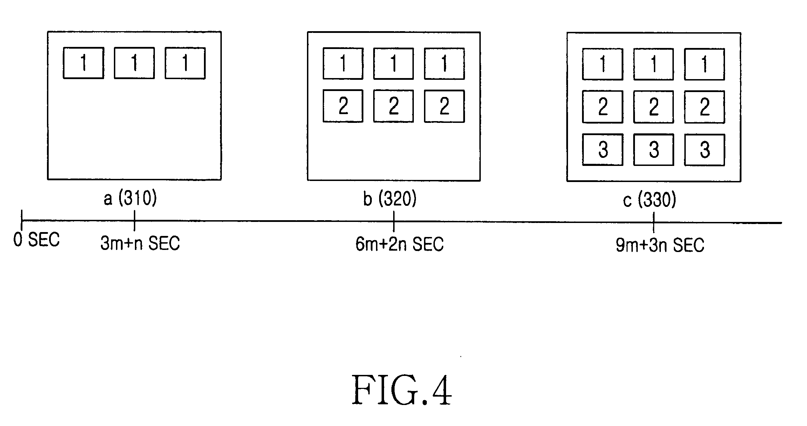

In the meantime, if it is determined in step 211 that the number of decoded images is equal to the number of simultaneously-displayed images, the controller 110 proceeds to step 213 where the controller 110 simultaneously displays the decoded images on one frame according to the image arrangement pattern, and resets the number of decoded images to zero (0). Thereafter, if it is determined in step 215 that there are remaining non-decoded images, the controller 110 repeatedly performs the above processes (steps 217, 209, 211, 213 and 215). For example, if the arrangement form of the currently-set image arrangement pattern is a 3x3 grid, the total number of images is nine, the number of simultaneously-displayed images is three, and the arrangement order is a row-by-row top-to-bottom direction, the images are displayed as shown in FIG. 4. Referring to FIG. 4, the controller 110 first decodes each of three images, adjusts their size, and then simultaneously displays them at time 'a' 310. Thereafter, the controller 110 decodes each of the next three images, adjusts their size, and then simultaneously displays the size-adjusted images at time 'b' 320. Accordingly, the total number of images displayed at time 'b' 320 is six. Subsequently, the controller 110 decodes each of the next three images, adjusts their size, and then simultaneously displays them at time 'c' 330. Therefore, the total number of images displayed at time 'c' 330 is nine. In this case, if it is assumed that the time required for decoding one image and adjusting the size of the decoded image is m seconds and the time required for displaying the decoded image is n seconds, the time 'a' 310 is 3m+n second, the time 'b' 320 is 6m+2n second, and the time 'c' 330 is 9m+3n second. That is, the total time required for displaying nine images is 9m+3n seconds. It can be appreciated that the display method proposed by the present invention is 6n seconds shorter in the total required time than the conventional display method shown in FIG. 1. Of course, if the number of simultaneously-displayed images is set higher, the required display time can be reduced further.

Referring back to FIG. 3, if it is determined in step 215 that there are no more images to decode, the controller 110 checks in step 219 whether there are any non-displayed decoded images. If there are any non-displayed decoded images, the controller 110 proceeds to step 213 where the controller 110 displays the decoded images. However, if there are no more decoded images, the controller 110 proceeds to step 221 where the controller 110 completes the image displaying, and ends the operation.

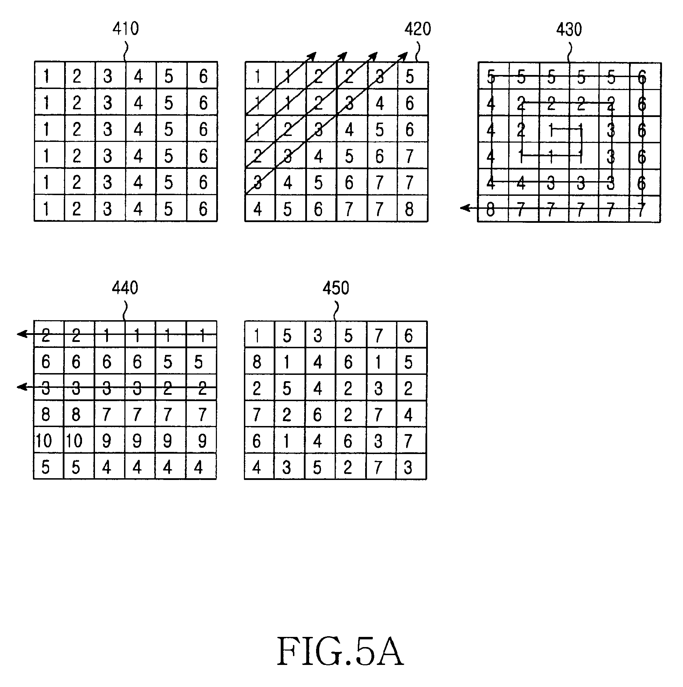

Examples of various image arrangement patterns according to exemplary embodiments of the present invention are shown in FIGs. 5A to 5D. In the image arrangement patterns shown in FIGs. 5A to 5D, the numbered tetragons each represent an image, and their numerals each represent the sequence in which their associated images are displayed according to the corresponding image arrangement pattern. Therefore, the images with the same numerals are simultaneously displayed.

FIG. 5A shows image arrangement patterns that each have a 6x6-grid arrangement form, but have different arrangement orders. For a first image arrangement pattern 410, the number of simultaneously-displayed images is six, and its arrangement order is a column-by-column left-to-right direction. Accordingly, thirty-six images can be displayed with six displays. The arrangement order of the first image arrangement pattern 410 is subject to various changes. For example, the arrangement order can be defined as a column-by-column right-to-left direction, or a row-by-row top-to-bottom or bottom-to-top direction. For a second image arrangement pattern 420, the number of simultaneously-displayed images is four, and its arrangement order is defined as a left bottom to right top diagonal. The arrangement order of the second image arrangement pattern 420 is also subject to various changes. For example, the arrangement order can be defined as a left top to right bottom diagonal, a right bottom to left top diagonal, or a right top to left bottom diagonal. For a third image arrangement pattern 430, the number of simultaneously-displayed images is five, and its arrangement order is defined as a center-to-edge clockwise spiral. The arrangement order of the third image arrangement pattern 430 can also be defined as an edge-to-center clockwise spiral, a center-to-edge counterclockwise spiral, or an edge-to-center counterclockwise spiral. For a fourth image arrangement pattern 440, the number of simultaneously-displayed images is four, and its arrangement order is defined as a row-by-row right-to-left direction on an every-other-row basis. The arrangement order of the fourth image arrangement pattern 440 is subject to change in the number of hopped rows, change in the display direction, or change from the row-by-row hopping to the column-by-column hopping. For a fifth image arrangement pattern 450, the number of simultaneously-displayed images is five, and the arrangement order is random.

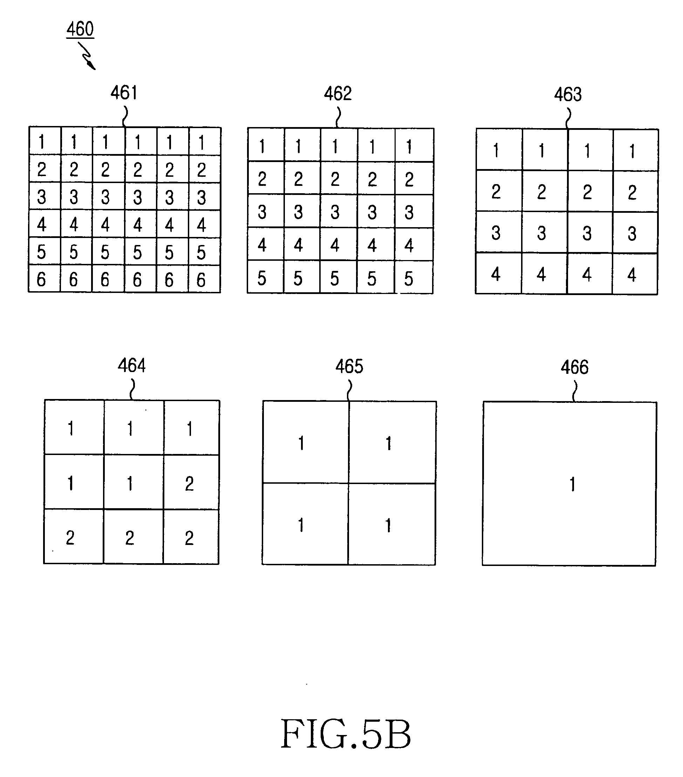

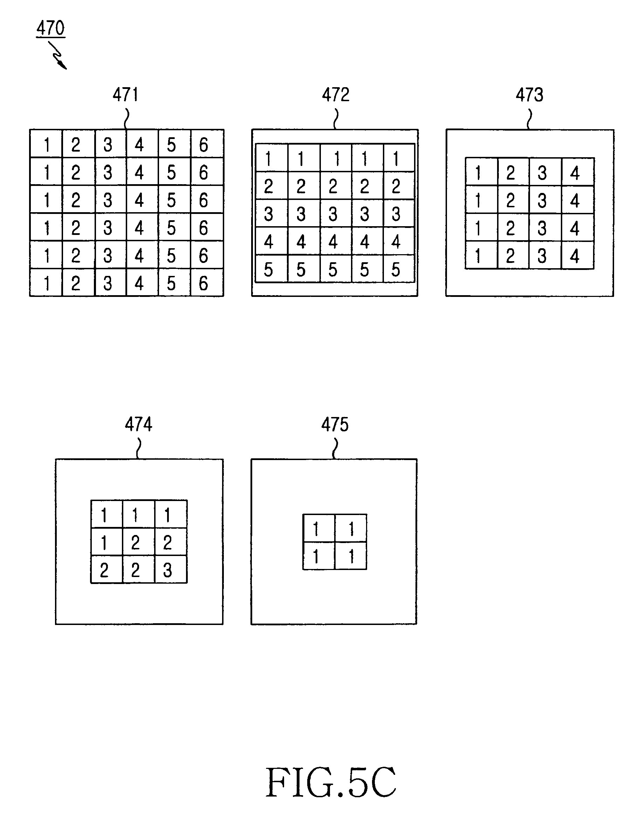

A sixth image arrangement pattern 460 shown in FIG. 5B is an example of the pattern in which images are displayed by sequentially repeating multiple frames for each of which the total number of images, the number of simultaneously-displayed images and the image size are differently set, while the arrangement form basically maintains a grid. The sixth image arrangement pattern 460 has independent set values for six frames. The sixth image arrangement pattern 460 has a 6×6-grid basic arrangement form, and the row and column decrease in number by one as the arrangement goes to the next frame. That is, the six frames 461, 462, 463, 464, 465 and 466 have 6×6, 5×5, 4×4, 3×3, 2×2 and 1×1 grids as their arrangement forms, respectively. For the six frames 461, 462, 463, 464, 465 and 466, the number of simultaneously-displayed images is set as six, five, four, three, two, and one, respectively. The image size is set such that the entire image can be fully displayed on the corresponding frame. Accordingly, the size of the displayed image(s) increases as the frame goes by. As a modification of the sixth image arrangement pattern 460, a seventh image arrangement pattern 470 shown in FIG. 5C can be defined. For the seventh image arrangement pattern 470, the arrangement order and the number of simultaneously-displayed images are differently set for the frames in the sixth image arrangement pattern 460, and all frames have the same image size.

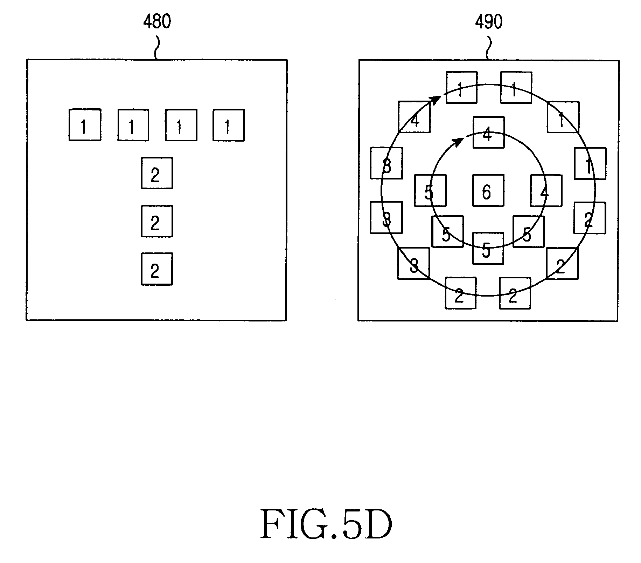

The image arrangement patterns shown in FIG. 5D are examples of image arrangement patterns having their own unique arrangement forms. An eighth image arrangement pattern 480, is an example of a character-shaped arrangement form, which is a T-shaped arrangement form, in which the number of simultaneously-displayed images is four and the arrangement order is defined as a writing order of the corresponding character. A ninth image arrangement pattern 490, is an example of a figure-style arrangement form, has a circular arrangement form, in which the number of simultaneously-displayed images is four and the arrangement order is defined as an edge-to-center direction for concentric circles having different diameters.

As is apparent from the foregoing description, in displaying multiple images on one frame, the present invention decodes a predetermined number of images, adjusts the sizes of the decoded images, and then simultaneously displays the decoded images on the frame, instead of decoding images, adjusting their size and displaying them on a one-by-one basis, and this display method can be applied to several image display patterns. As a result, the present invention can display multiple images on one frame more quickly.

While the invention has been shown and described with reference to a certain preferred embodiment thereof, it will be understood by those skilled in the art that various changes in form and details may be made therein without departing from the scope of the invention as defined by the appended claims. For example, although the number of simultaneously-displayed images is herein included in the image arrangement pattern, the number of simultaneously-displayed images may not be included in the image arrangement pattern. The image processing device can be included in various devices having an image processing function such as, for example, digital camera, mobile communication terminal, personal computer, etc.

## Claims

1. A method for displaying images in an image processing device, the method comprising :
(a) detecting a multi-image display request for displaying stored multiple images on one frame, determining a preset number of images to be displayed simultaneously among the multiple images,
(b) decoding said preset number of images among the multiple images, and adjusting a size of the decoded images according to a predetermined display image size;
(c) simultaneously displaying the size-adjusted decoded images on one frame according to an image arrangement pattern which is previously set as information indicating an arrangement rule for the stored multiple images displayed on one frame; and
(d) repeatedly performing steps (b) and (c) on non-displayed images among the stored multiple images until all of the stored multiple images are displayed.

2. The method of claim 1, wherein the number of simultaneously-displayed images is set to a number greater than one and less than or equal to a total number of images displayable on one frame.

3. The method of claim 2, wherein the frame is a region where images are displayed, wherein the image arrangement pattern is information on an arrangement rule for multiple images displayed on one frame, and includes as set values a total number of images, indicating the number of images displayable on one frame, an arrangement form indicating an entire form in which the images are arranged, an arrangement order indicating an order in which the images are displayed on the frame, an arrangement position indicating positions where the images are displayed on the frame, and sizes of the images displayed on the frame.

4. The method of claim 3, wherein the set values included in the image arrangement pattern are set according to a user's selection.

5. The method of claim 4, wherein the image arrangement pattern includes the set values, which are independently set for multiple frames.

6. An apparatus for displaying images in an image-processing device, the apparatus comprising:
a memory for storing multiple images;
a display; and
a controller for displaying all of the stored multiple images on the display by detecting a multi-image display request for displaying stored multiple images on one frame determining a preset number of images to be displayed simultaneously among to multiple images, for each preset number of images decoding said preset number of images among the multiple images, adjusting a size of the decoded images according to a predetermined display image size, and simultaneously displaying the size-adjusted decoded images on one frame according to an image arrangement pattern which is previously set as information indicating an arrangement rule for the stored multiple images displayed on one frame.

7. The apparatus of claim 6, wherein the number of simultaneously-displayed images is set to a number greater than one and less than or equal to a total number of images displayable on one frame.

8. The apparatus of claim 7, wherein the frame is a region where images are displayed, wherein the image arrangement pattern is information on an arrangement rule for multiple images displayed on one frame, and includes as set values a total number of images, indicating the number of images displayable on one frame, an arrangement form indicating an entire form in which the images are arranged, an arrangement order indicating an order in which the images are displayed on the frame, an arrangement position indicating positions where the images are displayed on the frame, and sizes of the images displayed on the frame.

9. The apparatus of claim 8, wherein the controller sets the set values included in the image arrangement pattern according to a user's selection.

10. The apparatus of claim 9, wherein the image arrangement pattern includes the set values, which are independently set for multiple frames.

## Patentansprüche

1. Verfahren zum Anzeigen von Bildern in einem Bildverarbeitungsgerät, wobei das Verfahren die folgenden Schritte beinhaltet:
(a) Erkennen einer Mehrbildanzeigeanforderung zum Anzeigen mehrerer gespeicherter Bilder auf einem Frame, Ermitteln einer voreingestellten Anzahl von gleichzeitig anzuzeigenden Bildern unter den mehreren Bildern;
(b) Decodieren der genannten voreingestellten Anzahl von Bildern unter den mehreren Bildern und Justieren einer Größe der decodierten Bilder gemäß einer vorbestimmten Anzeigebildgröße;
(c) gleichzeitiges Anzeigen der größenjustierten decodierten Bilder auf einem Frame gemäß einem Bildanordnungsmuster, das zuvor als eine Information festgelegt wurde, die eine Anordnungsregel für die auf einem Frame angezeigten mehreren gespeicherten Bilder angibt; und
(d) wiederholtes Ausführen der Schritte (b) und (c) auf nicht angezeigten Bildern unter den mehreren gespeicherten Bildern, bis alle der mehreren gespeicherten Bilder angezeigt sind.

2. Verfahren nach Anspruch 1, wobei die Zahl der gleichzeitig angezeigten Bilder auf eine Zahl gesetzt wird, die größer als eins und gleich oder kleiner als eine Gesamtzahl von auf einem Frame anzeigbaren Bildern ist.

3. Verfahren nach Anspruch 2, wobei der Frame eine Region ist, wo Bilder angezeigt werden, wobei das Bildanordnungsmuster eine Information über eine Anordnungsregel für mehrere auf einem Frame angezeigte Bilder ist und als Sollwerte eine Gesamtzahl von Bildern beinhaltet, die die Zahl der auf einem Frame anzeigbaren Bilder angibt, wobei eine Anordnungsform eine gesamte Form anzeigt, in der die Bilder angeordnet sind, wobei eine Anordnungsreihenfolge eine Reihenfolge angibt, in der die Bilder auf dem Frame angezeigt werden, wobei eine Anordnungsposition Positionen, in denen die Bilder auf dem Frame angezeigt werden, und Größen der auf dem Frame angezeigten Bilder anzeigt.

4. Verfahren nach Anspruch 3, wobei die in dem Bildanordnungsmuster enthaltenen Sollwerte gemäß einer Benutzerwahl festgelegt werden.

5. Verfahren nach Anspruch 4, wobei das Bildanordnungsmuster die Sollwerte beinhaltet, die für mehrere Frames unabhängig festgelegt wurden.

6. Vorrichtung zum Anzeigen von Bildern auf einem Bildverarbeitungsgerät, wobei die Vorrichtung Folgendes umfasst:
einen Speicher zum Speichern mehrerer Bilder;
ein Display; und
eine Steuerung zum Anzeigen aller gespeicherten mehreren Bilder auf dem Display durch Erkennen einer Mehrbildanzeigeanforderung zum Anzeigen mehrerer gespeicherter Bilder auf einem Frame, Ermitteln einer voreingestellten Zahl von gleichzeitig anzuzeigenden Bilder unter den mehreren Bildern für jede voreingestellte Zahl von Bildern, Decodieren der genannten voreingestellten Zahl von Bildern unter den mehreren Bildern, Justieren einer Größe der decodierten Bilder gemäß einer vorbestimmten Anzeigebildgröße und gleichzeitiges Anzeigen der größenjustierten decodierten Bilder auf einem Frame gemäß einem Bildanordnungsmuster, das zuvor als eine Information festgelegt wurde, die eine Anordnungsregel für die auf einem Frame angezeigten mehreren gespeicherten Bilder angibt.

7. Vorrichtung nach Anspruch 6, wobei die Zahl der gleichzeitig angezeigten Bilder auf eine Zahl gesetzt ist, die größer als eins und gleich oder kleiner als eine Gesamtzahl von auf einem Frame anzeigbaren Bilder ist.

8. Vorrichtung nach Anspruch 7, wobei der Frame eine Region ist, wo Bilder angezeigt werden, wobei das Bildanordnungsmuster eine Information über eine Anordnungsregel für mehrere auf einem Frame angezeigte Bilder ist und als Sollwerte eine Gesamtzahl von Bildern beinhaltet, die die Zahl der auf einem Frame anzeigbaren Bilder angibt, wobei eine Anordnungsform eine gesamte Form anzeigt, in der die Bilder angeordnet sind, wobei eine Anordnungsreihenfolge eine Reihenfolge angibt, in der die Bilder auf dem Frame angezeigt werden, wobei eine Anordnungsposition Positionen, in denen die Bilder auf dem Frame angezeigt werden, und Größen der auf dem Frame angezeigten Bilder anzeigt.

9. Vorrichtung nach Anspruch 8, wobei die Steuerung die in dem Bildanordnungsmuster enthaltenen Sollwerte gemäß einer Benutzerwahl festlegt.

10. Vorrichtung nach Anspruch 9, wobei das Bildanordnungsmuster die Sollwerte beinhaltet, die für mehrere Frames unabhängig gesetzt werden.

## Revendications

1. Procédé servant à afficher des images dans un dispositif de traitement d'images, le procédé comprenant les opérations consistant à :
(a) détecter une demande d'affichage multi-images pour afficher sur une trame des images multiples stockées, déterminer parmi les images multiples un nombre prédéfini d'images destinées à être affichées simultanément ;
(b) décoder ledit nombre prédéfini d'images parmi les images multiples, et ajuster une taille des images décodées en fonction d'une taille d'image d'affichage prédéterminée ;
(c) afficher simultanément les images décodées à taille ajustée sur une trame en fonction d'un schéma de disposition d'images qui a été défini précédemment en tant qu'information indiquant une règle de disposition pour les images multiples stockées affichées sur une trame ; et
(d) effectuer de façon répétée les étapes (b) et (c) sur les images non-affichées parmi les images multiples stockées jusqu'à ce que toutes les images multiples stockées soient affichées.

2. Procédé selon la revendication 1, le nombre d'images affichées simultanément étant défini de sorte à être un nombre supérieur à 1 et inférieur ou égal à un nombre total d'images affichables sur une trame.

3. Procédé selon la revendication 2, la trame étant une région dans laquelle des images sont affichées, le schéma de disposition d'images étant des informations relatives à une règle de disposition pour des images multiples affichées sur une trame, et englobant un nombre total d'images en tant que valeurs définies, indiquant le nombre d'images affichables sur une trame, une forme de disposition qui indique une forme globale dans laquelle les images sont disposées, un ordre de disposition qui indique un ordre suivant lequel les images sont affichées sur la trame, une position de disposition qui indique les positions dans lesquelles les images sont affichées sur la trame, et les tailles des images affichées sur la trame.

4. Procédé selon la revendication 3, les valeurs définies incluses dans le schéma de disposition des images étant définies en fonction de la sélection faite par un utilisateur.

5. Procédé selon la revendication 4, le schéma de disposition d'images englobant les valeurs définies qui sont définies indépendamment pour des trames multiples.

6. Appareil servant à afficher des images dans un dispositif de traitement d'images, l'appareil comprenant :
une mémoire pour stocker des images multiples ;
un afficheur ; et
un contrôleur pour afficher sur l'afficheur toutes les images multiples stockées grâce à la détection d'une demande d'affichage multi-images pour afficher sur une trame des images multiples stockées, déterminer parmi les images multiples un nombre prédéfini d'images destinées à être affichées simultanément, pour chaque nombre prédéfini d'images décoder ledit nombre prédéfini d'images parmi les images multiples, ajuster une taille des images décodées en fonction d'une taille d'image d'affichage prédéterminée, et afficher simultanément les images décodées à taille ajustée sur une trame en fonction d'un schéma de disposition d'images qui a été défini précédemment en tant qu'information indiquant une règle de disposition pour les images multiples stockées affichées sur une trame.

7. Appareil selon la revendication 6, le nombre d'images affichées simultanément étant défini de sorte à être un nombre supérieur à 1 et inférieur ou égal à un nombre total d'images affichables sur une trame.

8. Appareil selon la revendication 7, la trame étant une région dans laquelle des images sont affichées, le schéma de disposition d'images étant des informations relatives à une règle de disposition pour des images multiples affichées sur une trame, et englobant un nombre total d'images en tant que valeurs définies, indiquant le nombre d'images affichables sur une trame, une forme de disposition qui indique une forme globale dans laquelle les images sont disposées, un ordre de disposition qui indique un ordre suivant lequel les images sont affichées sur la trame, une position de disposition qui indique les positions dans lesquelles les images sont affichées sur la trame, et les tailles des images affichées sur la trame.

9. Appareil selon la revendication 8, le contrôleur réglant les valeurs définies incluses dans le schéma de disposition des images en fonction de la sélection faite par un utilisateur.

10. Appareil selon la revendication 9, le schéma de disposition d'images englobant les valeurs définies qui sont définies indépendamment pour des trames multiples.
